# EUROPÄISCHE PATENTSCHRIFT

(11) **EP 3 781 425 B1**
(45) Veröffentlichungstag und Bekanntmachung des Hinweises auf die Patenterteilung: **11.06.2025**
(21) Anmeldenummer: 19720371.4
(22) Anmeldetag: 02.04.2019
(51) Int. Cl.: B60K 6/48, B60W 10/02, B60W 10/06, B60W 10/08, B60W 10/113, B60W 20/30

(54) **VERFAHREN ZUR RÜCKGEWINNUNG VON ENERGIE DES VERBRENNUNGSMOTORS BEIM HOCHSCHALTEN SOWIE STEUERGERÄT ZUR DURCHFÜHRUNG DES VERFAHRENS**
METHOD FOR RECOVERING ENERGY OF THE COMBUSTION ENGINE DURING UPSHIFT AND CONTROL DEVICE FOR CARRYING OUT THE METHOD
PROCÉDÉ DE RÉCUPÉRATION DE L'ÉNERGIE D'UN MOTEUR À COMBUSTION PENDANT UNE MONTÉE DE RAPPORT ET DISPOSITIF DE COMMANDE POUR LA MISE EN OEUVRE DE CE PROCÉDÉ

(30) Priorität: 20.04.2018 DE 102018206130
(43) Veröffentlichungstag der Anmeldung: 24.02.2021
(73) Patentinhaber: Magna PT B.V. & Co. KG, 74199 Untergruppenbach (DE)
(72) Erfinder: PROST, Jacques, 74074 Heilbronn (DE); KNÖPFLE, Philipp, 71636 Ludwigsburg (DE)
(74) Vertreter: Reuter, Silke Beatrix
(86) Internationale Anmeldenummer: PCT/EP2019/058280
(87) Internationale Veröffentlichungsnummer: WO 2019/201591

(56) Entgegenhaltungen:
- EP-A1- 1 262 684
- EP-A1- 1 431 623
- EP-A1- 1 559 603
- DE-A1- 102010 044 618
- US-A1- 2002 088 290
- US-A1- 2017 210 374

## Beschreibung

Die Erfindung betrifft ein Verfahren zur Rückgewinnung von Energie eines Verbrennungsmotors beim Hochschalten sowie ein Steuergerät ausgelegt zur Durchführung des Verfahrens.

### Stand der Technik

Die auf dem Gebiet der Kraftfahrzeugtechnik besteht seit einigen Jahren ein Trend hin zu Hybridfahrzeugen, bei denen die Antriebsleistung mittels eines Verbrennungsmotors und mittels einer elektrischen Maschine bereitgestellt werden kann. Hierbei wird generell unterschieden zwischen sogenannten milden Hybrid Anwendungen, bei denen die elektrische Maschine lediglich kurzzeitig als alleinige Antriebsquelle verwendbar ist bzw. überwiegend als Boost-Antrieb eingesetzt wird. In sogenannten Range-Extender- Antriebssträngen dient eine elektrische Maschine hingegen als Hauptantriebsmotor und der Verbrennungsmotor wird zum Laden einer Batterie mitgeführt. Hinsichtlich des Layouts von solchen Antriebssträngen besteht die Möglichkeit den Verbrennungsmotor die elektrische Antriebsmaschine in Leistungsflussrichtung vor einer Kupplungsanordnung anzuordnen.

Dieses Layout ist konstruktiv vergleichsweise einfach realisierbar, hat jedoch funktionelle Einschränkungen. In derartigen Hybrid Antriebsträngen wird als Getriebeanordnung häufig eine Planetengetriebe-Anordnung gegebenenfalls in Verbindung mit einem stufenlosen Getriebe verwendet. Besonders vorteilhaft ist jedoch die Integration eines Doppelkupplungsgetriebes in einem Hybrid-Antriebstrang, insbesondere dann, wenn die elektrische Maschine mit dem Eingang eines Teilgetriebes verbunden ist.

Aus der DE 10 2010 044 618 A1 ist ein Doppelkupplungsgetriebe mit nasser Doppelkupplung, elektromechanischer Betätigung des Schaltsystems und einer elektrohydraulischen Aktuatorik für die Doppelkupplung bekannt.

Mit der elektrischen Aktuatorik ist das Doppelkupplungsgetriebe in der Lage, bei abgetrenntem Verbrennungsmotor automatisch zu kuppeln und zu schalten. Es ist somit vorbereitet für ein Start/Stopp-System und eine erweiterte Segelfunktion, bei der das Fahrzeug bei abgekoppeltem Verbrennungsmotor frei rollt. Die elektrische Aktuatorik ermöglicht darüber hinaus die einfache Hybridisierung des Getriebes, durch eine zusätzliche E-Maschine.

Durch die Verschärfung der Abgasvorschriften für Verbrennungsfahrzeuge ist es sinnvoll, jede auch kleinere Einsparungen an fossilen Brennstoffen und somit an Abgasen umzusetzen.

Die unterschiedlichen Hybrid-Antriebstränge bieten die Möglichkeit, Energie, die das Fahrzeug ein Betrieb enthält, auf die unterschiedlichsten Art und Weise zurück zu gewinnen. Als einfachstes Beispiel ist dabei die Rückgewinnung von Energie aus den Bremsvorgängen des Fahrzeugs bekannt, die mit einem Wirkungsgrad über 80% Energie in den Antriebsprozess rückführt.

Allerdings gibt es im Fahrzeug noch weitere Bereiche, die bezüglich einer Energierückgewinnung betrachtet werden können.

Ein Verbrennungsmotor, der beim Hochschalten in seiner Drehzahl reduziert wird, enthält Rotationsenergie, die bisher ohne Nutzung als Schleppverlust lediglich in Wärme umgewandelt wird. Standarderweise wird beim Hochschalten die Verbrennung künstlich durch Verstellung des Zündwinkels verschlechtert, um eine dynamische, kurzzeitige Reduzierung des Moments vom Verbrennungsmotor zu erreichen. Dies führt zu schlechteren Abgaswerten, da die Verbrennung nicht mehr optimal ist.

Aus der US 2017 0 210 374 A1 ist ein Hybridantrieb in einer P1 Konfiguration bekannt. Anstatt die Drosselklappenstellung des Verbrennungsmotors zu steuern, steuert ein Controller die Drehmomentabgabe der elektrischen Maschine an.

Die neue Drehmomentausgabe ändert die Drehzahl des Verbrennungsmotors, da der Verbrennungsmotor mit der elektrischen Maschine gekoppelt ist.

Während eines Hochschaltens wird die in ein Getriebe eingegebene Drehzahl verringert. Somit steuert der Controller die elektrische Maschine, um die Drehzahl des Verbrennungsmotors zu verringern. Dies kann erreicht werden, indem ein Drehmoment in umgekehrter Richtung der Motordrehung erzeugt wird. Da das Getriebe während eines Schaltvorgangs die elektrische Maschine und das Differential trennt, wird die Drehmomentübertragung dazwischen gestoppt.

Die EP 1 431 623 A1 schlägt ein Verfahren zum Steuern einer elektrischen Maschine eines Serienhybridfahrzeugs vor. Die Eingangswelle des Getriebes angetrieben von einer Antriebswelle des Verbrennungsmotors wird von der Antriebswelle während des Gangwechsels getrennt. Eine elektrische Maschine, die auf die Motorwelle gekoppelt ist und stellt Hilfsdrehmoment bereit. Wenn Validierungsbedingungen erfüllt sind, wird eine Energierückgewinnung während einen Gangwechsels ermöglicht.

DE 10 2010 044 618 A1 zeigt unterschiedliche Verfahren bei Hoch- und Zurückschaltung in einem Hybridfahrzeug, das rein elektrisch fährt. Dabei wird der Verbrennungsmotor als Schwungmasse verwendet, ohne dass er gezündet ist.

Es ist Aufgabe der Erfindung, ein Verfahren zur Rückgewinnung von Energie aus einem Verbrennungsmotor während des Hochschaltvorgangs vorzustellen.

### Beschreibung der Erfindung

Die Aufgabe wird gelöst mit einem Verfahren zur Rückgewinnung von kinetischer Energie eines Verbrennungsmotors durch Reduktion der Drehzahl des Verbrennungsmotors während einer vorgegeben Zeit beim Hochschalten eines Getriebes in einem Fahrzeug und Umwandlung der kinetischen Energie der Rotation des Verbrennungsmotors oder einer Antriebseinheit in elektrische Energie durch mindestens eine elektrische Maschine.

Die elektrische Maschine ist in einem Doppelkupplungsgetriebe mit einem ersten und zweiten Teilgetriebe an einem Teilgetriebe ankoppelbar.

Dabei wird die Energie des abbremsenden Verbrennungsmotors durch Stellen eines überhöhten Drehmoments mit der zweiten Kupplung im zweiten Teilgetriebe und dem Stellen eines negativen Drehmoments der angekoppelten elektrischen Maschine wiedergewonnen. Ziel ist, eine Kompensation der Drehmomentüberhöhung von der Kupplung als Abtriebsmoment zu kompensieren.

Vorteilhafterweise wird der Verfahrensstart durch die Anforderung des Hochschaltens ausgelöst.

Vorteilhafterweise wird das Verfahren gestoppt, wenn der Verbrennungsmotor seine Zieldrehzahl erreicht.

Die Aufgabe wird gelöst mit einer Steuerung ausgelegt zur Durchführung des Verfahrens. wobei die Steuerung eine Motorsteuerung und/oder eine Getriebesteuerung mit jeweiligen Datenaustausch ist.

### Beschreibung der Zeichnungen

Die Erfindung wird nachfolgend beispielhaft unter Bezugnahme auf die beigefügte Zeichnung beschrieben.
Fig. 1 und 2 zeigen den zeitlichen Verlauf von Motor-Drehzahl und Drehmomenten im Stand der Technik,
Figur 3 zeigt den zeitlichen Verlauf von Drehmomenten mit einer Ausführungsform der erfinderischen Lösung,
Fig. 4 zeigt eine schematische Darstellung der Hybrid-Architektur in zwei unterschiedlichen Varianten,
Figur 5 zeigt schematisch einen Verfahrensverlauf.

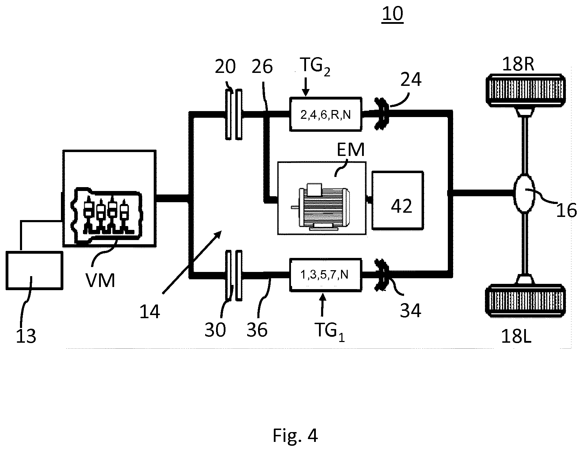

In Figur 4 ist schematisch eine hybride Lösung mit der Integration eines Elektromotors EM in einem Doppelkupplungsgetriebe dargestellt. Als weitere elektrische Maschine weist die Anordnung einen Startergenerator 13 auf.

Die erfindungsgemäße Lösung lässt sich sowohl mit dem Hybridisierungs-Doppelkupplungsgetriebe allein als auch mit dem Startergenerator allein ausführen.

Der Antriebsstrang 10 beinhaltet einen Verbrennungsmotor (VM) VM, der mit einem Startergenerator 13 verbunden ist. Ferner beinhaltet der Antriebsstrang 10 ein Doppelkupplungsgetriebe 14, dessen Abtriebsseite mit einem Differential 16 verbunden ist. Das Differential 16 verteilt Antriebsleistung auf ein linkes und ein rechtes angetriebenes Rad 18L, 18R.

Das Doppelkupplungsgetriebe 14 beinhaltet eine erste Reibkupplung 30 sowie ein erstes Teilgetriebe TG₁. Das erste Teilgetriebe TG₁ beinhaltet beispielsweise Gangstufen N, 1, 3, 5, etc. die mittels schematisch angedeuteter Schaltkupplungen 34 ein- und auslegbar sind. Die erste Reibkupplung 30 und das erste Teilgetriebe TG₁ bilden einen ersten Leistungsübertragungspfad 36 zur Übertragung von Leistung von dem Antriebsmotor VM zu dem Differential 16.

Das Doppelkupplungsgetriebe 14 beinhaltet ferner eine zweite Reibkupplung 20 sowie ein zweites Teilgetriebe TG₂. Das zweite Teilgetriebe TG₂ beinhaltet beispielsweise die ungeraden Gangstufen N, 2, 4, 6, R, die mittels zugeordneter Schaltkupplungen 24 ein- und auslegbar sind. Die zweite Reibkupplung 20 und das zweite Teilgetriebe TG₂ bilden einen zweiten Leistungsübertragungspfad 26 zur Übertragung von Antriebsleistung von dem Antriebsmotor VM zu dem Differential 16.

Ferner beinhaltet der Antriebsstrang 10 eine elektrische Maschine EM, die mit einer Steuerung 42 zur Ansteuerung und Energieversorgung verbunden ist. Die Steuerung 42 kann auch eine Leistungselektronik sowie eine Batterie beinhalten.

Die elektrische Maschine EM ist an das zweite Teilgetriebe TG₂ fest angebunden, beispielsweise mittels eines Stirnradsatzes oder dergleichen. Alternativ hierzu kann die elektrische Maschine EM mittels einer Koppelanordnung an das zweite Teilgetriebe TG₂ angebunden sein.

Die Anbindung der elektrischen Maschine EM an das zweite Teilgetriebe TG₂, das eine hohe Gangstufe und die Rückwärtsgangstufe aufweist, ermöglicht ein elektrisches Fahren in nahezu allen Betriebssituationen.

Der Antriebsstrang 10 ist dazu ausgelegt, in drei unterschiedlichen Betriebsarten zu arbeiten. In einem konventionellen Antriebsmodus wird Antriebsleistung nur von dem Antriebsmotor, dem Verbrennungsmotor VM erzeugt. Gangwechsel erfolgen auf zugkraftunterbrechungsfreie Art und Weise, indem Antriebsleistung über einen der Leistungsübertragungspfade 26, 36 geführt wird, wobei in dem Teilgetriebe des anderen Leistungsübertragungspfades eine Gangstufe vorgewählt wird.

Anschließend erfolgt ein Gangwechsel durch Übergabe des Leistungsübertragungsflusses von dem einen Pfad auf den anderen Pfad, indem die Reibkupplungen 20, 30 auf überschneidende Art und Weise betätigt werden. Dieser Antriebsmodus ist auf dem Gebiet der Doppelkupplungsgetriebe allgemein bekannt.

Ferner kann ein zweiter hybridischer Antriebsmodus eingerichtet werden, bei dem Antriebsleistung sowohl von dem Verbrennungsmotor VM als auch von der elektrischen Maschine EM bereitgestellt wird. Hierbei können die Antriebsleistungen im Wesentlichen über den Summenpunkt am Eingang des zweiten Teilgetriebes TG₂ addiert werden.

Schließlich ist ein dritter Antriebsmodus möglich, bei dem nur die elektrische Maschine EM zur Erzeugung von Antriebsleistung angesteuert wird, wohingegen der Verbrennungsmotor (VM) VM stillgelegt wird.

In diesem dritten Antriebsmodus rekuperiert die elektrische Maschine EM über die Antriebsräder 18 R und 18 L und das zweite Teilgetriebe TG₂ Energie.

In einer ersten Variante der Erfindung wird die Lösung beschrieben, wie sie unter Verwendung eines hybridisierten Doppelkupplungsgetriebes darstellbar ist.

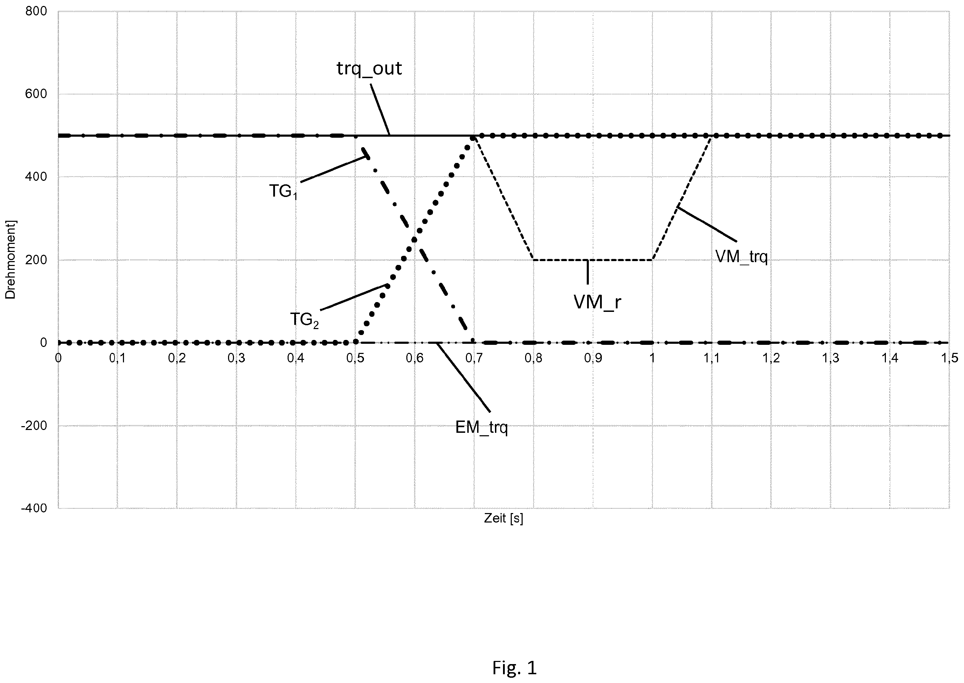

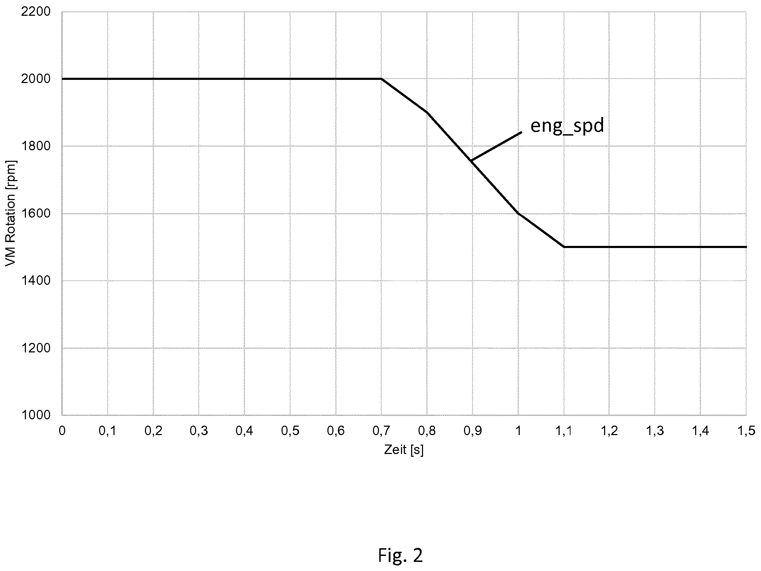

Dazu geht man zunächst von der Situation ohne Rekuperation aus, wie sie im Stand der Technik verwendet und in den Figuren 1 und 2 gezeigt wird.

Fig. 1 zeigt die Situation des Hochschaltens, wie sie ohne eine besondere Lösung zur Wiedergewinnung von Energie in einem Doppelkupplungsgetriebe abläuft. Die beiden Teilgetriebe des Doppelkupplungsgetriebes drehen bei unterschiedlichen Drehzahlen. In diesem Beispiel ist der Verbrennungsmotor VM zunächst ausgehend von der Zeit 0 mit dem ersten Teilgetriebe TG₁ gekoppelt, das somit ein Drehmoment, beispielhaft von 500 Nm aufweist, während das zweite Teilgetriebe TG₂ kein Drehmoment beiträgt. Zum Zeitpunkt 0,5 s wird das Hochschalten ausgelöst. Die Geschwindigkeit des Verbrennungsmotors soll durch das Hochschalten reduziert werden Die erste Kupplung 30 wird geöffnet, die zweite Kupplung 20 geschlossen. Damit sinkt bis zum Zeitpunkt 0,7 s das Drehmoment des ersten Teilgetriebes TG₁ auf Null ab, während das Drehmoment des zweiten Teilgetriebes TG₂ auf das Zielmoment steigt.

Nach Ende der Kupplungsüberblendung wird das Drehmoment des Verbrennungsmotors VM_trq durch Änderung des Zündwinkels für eine bestimmte Zeitdauer reduziert, was mit der Kurve VM_trq angedeutet ist. Dabei wird auf die Luftzufuhr sowie auf den Zündwinkel Einfluss genommen, wobei im Normalfall die Einspritzung gleichbleibt

Dieser Eingriff in die Zündung des Verbrennungsmotors wird im Allgemeinen durch einen späteren Zündwinkel realisiert, wobei der Verbrennungsmotor in einem für ihn ungünstigeren Bereich arbeitet und mehr Kraftstoff verbraucht.

Der Verbrennungsmotor wird abgebremst, da er im Bereich der Drehmomentreduktion VM_r weniger Drehmoment als das Teilgetriebe TG 2 aufweist.

Die elektrische Maschine EM im Getriebe leistet in diesem Beispiel keinerlei Beitrag zum resultierenden Drehmoment trq_out an den Rädern, was mit der Nulllinie EM_trq angedeutet ist. Meist ist zudem im Stand der Technik keine elektrische Maschine vorhanden ist.

Der Verlauf der Drehzahl ist dabei schematisch in Figur 2 gezeigt. In dieser Grafik ist die Geschwindigkeit des Verbrennungsmotors eng_spd über der Zeit dargestellt. Zum Zeitpunkt 0,7 Sekunden wird das Drehmoment des Verbrennungsmotors, wie bereits oben beschrieben, reduziert und die Geschwindigkeit des Verbrennungsmotors durch ein Teilgetriebe reduziert.

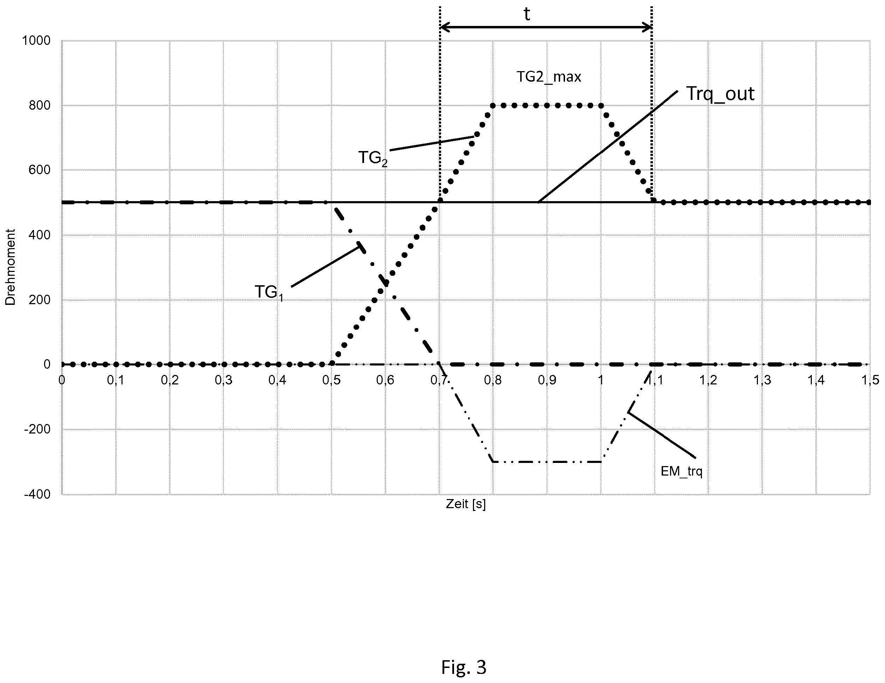

Der erfindungsgemäße Verlauf wird in der Figur 3 dargestellt, dabei wird der Verbrennungsmotor überhaupt nicht mehr beeinflusst. Es wird kein Zündwinkeleingriff mehr vorgenommen.

Um die erfindungsgemäße Lösung umzusetzen, muss eine elektrische Maschine EM vorhanden sein.

Auch in diesem Beispiel ist der Verbrennungsmotor VM zunächst ausgehend von der Zeit 0 mit dem ersten Teilgetriebe TG₁ gekoppelt, das somit ein Drehmoment, beispielhaft von 500 Nm aufweist, während das zweite Teilgetriebe TG₂ kein Drehmoment beiträgt. Zum Zeitpunkt 0,5 s wird wieder das Hochschalten ausgelöst. Die erste Kupplung 30 wird geöffnet, die zweite Kupplung 20 geschlossen. Damit sinkt bis zum Zeitpunkt 0,7 s das Drehmoment des ersten Teilgetriebes TG₁ wieder auf Null ab, während das Drehmoment des zweiten Teilgetriebes TG₂ steigt. Allerdings wird mit der zweiten Kupplung 20 ein überhöhtes Drehmoment TG₂_max eingestellt, das über eine gewisse Zeitdauer, im Beispiel 0,2 s gehalten wird.

Gleichzeitig mit dem überhöhten Drehmoment des zweiten Teilgetriebes wird die elektrische Maschine EM mit einem negativen Drehmoment EM_trq betrieben.

Dadurch wird die kinetische Energie des Verbrennungsmotors reduziert und in elektrische Energie umgewandelt. Die elektrische Energie steht in Batterien, für einen späteren Einsatz zur Verfügung.

Der Verbrennungsmotor wird dabei, wie in Figur 2 dargestellt, abgebremst.

Der Einbauort der elektrischen Maschine und ihre Anbindung an das Getriebe sind dabei nicht von Bedeutung. Es geht lediglich darum, die elektrische Maschine mit einem negativen Drehmoment zu betreiben und so die Drehzahlreduzierung des Verbrennungsmotors zur Rekuperation zu verwenden.

Die Realisierung der erfindungsgemäßen Methode erfolgt in einer Softwarelösung, die in der Fahrzeugsteuerung, genauer entweder in einer Motorsteuerung, einer Getriebesteuerung oder einer Kombination der Steuerungen enthalten sein kann.

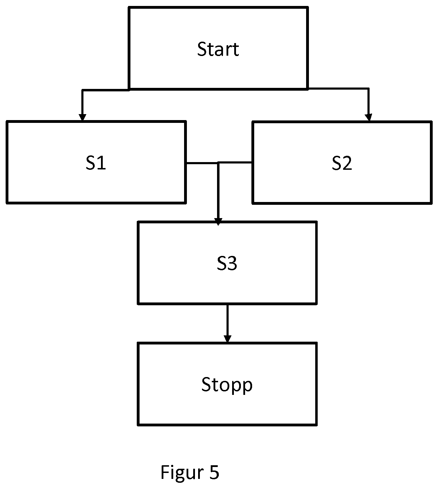

Das erfindungsgemäße Verfahren wird schematisch noch mal in der Figur 5 dargestellt. Das Verfahren beginnt mit dem Block "Start", der durch die Anforderung zum Hochschalten getriggert wird.

Im Verfahrensschritt S1 wird mit der zweiten Kupplung 20 des zweiten Teilgetriebes TG₂ ein überhöhtes Drehmoment TG₂_max gestellt, während in S2 die erste Kupplung 30 geöffnet wird. Gleichzeitig wird das Drehmoment der elektrischen Maschine EM_trq negativ gestellt.

Dieser Zustand wird für eine kurze Zeit aufrechterhalten, was im Schritt S3 dargestellt ist. In dieser Zeit t, die im gezeigten Beispiel 0,2 Sekunden beträgt, wird über die elektrische Maschine Energie zurückgewonnen und in Batterien gespeichert.

Das Verfahren wird an dieser Stelle gestoppt, das überhöhte, gestellte Drehmoment der zweiten Kupplung 20 wieder auf den Zielwert gestellt und das Drehmoment der elektrischen Maschine wieder auf den Wert Null oder einen sonstigen Zielwert zurückgesetzt.

Das Verfahren ist auf unterschiedliche Hybrid-Anordnungen anwendbar. Es ist auch eine Anordnung der elektrischen Maschine EM eingangsseitig vor dem Getriebe oder eine Anordnung der elektrischen Maschine EM am Getriebeausgang mit direkter Anbindung an der Abtriebswelle des Getriebes möglich.

### Bezugszeichenliste

10 Antriebsstrang
13 Startergenerator
VM Verbrennungsmotor
14 Doppelkupplungsgetriebe
16 Differenzial
18 L, 18 R rechtes und linkes Rad
30 erste Reibungskupplung
34 Schaltkupplung
36 erster Leistungsübertragungspfad
20 zweite Reibkupplung
24 zweite Schaltkupplung
26 zweiter Leistungsübertragungspfad
42 Steuerung
EM elektrische Maschine
TG₁ erstes Teilgetriebe
TG₂ zweites Teilgetriebe
S1-S4 Verfahrensschritte

## Patentansprüche

1. Verfahren zur Rückgewinnung von kinetischer Energie eines Verbrennungsmotors (VM) durch Reduktion der Drehzahl des Verbrennungsmotors (VM) während einer vorgegeben Zeit (t) beim Hochschalten eines Getriebes (14) in einem Fahrzeug und Umwandlung der kinetischen Energie der Rotation des Verbrennungsmotors (eng_spd) oder einer Antriebseinheit in elektrische Energie durch mindestens eine elektrische Maschine (EM, 13), **dadurch gekennzeichnet, dass** die elektrische Maschine (EM) in einem Doppelkupplungsgetriebe (14) mit einem ersten und zweiten Teilgetriebe (TG₁, TG₂) und einer ersten und zweiten Kupplung (20,30) an einem der Teilgetriebe (TG1, TG2) ankoppelbar ist dass die Rückgewinnung der Energie des abbremsenden Verbrennungsmotors (VM) durch Stellen eines überhöhten Drehmoments (TG₂_max) mit der zweiten Kupplung (20) im zweiten Teilgetriebe (TG₂) und dem Stellen eines negativen Drehmoments der angekoppelten elektrischen Maschine (EM_tq) erfolgt.

2. Verfahren zur Rückgewinnung von kinetischer Energie eines Verbrennungsmotors (VM) nach Anspruch 1, **dadurch gekennzeichnet, dass** der Verfahrensstart (Start) durch die Anforderung des Hochschaltens ausgelöst wird.

3. Verfahren zur Rückgewinnung von kinetischer Energie eines Verbrennungsmotors (VM) nach einem der vorhergehenden Ansprüche, **dadurch gekennzeichnet, dass** das Verfahren (Stopp) gestoppt wird, wenn der Verbrennungsmotor (VM) seine Zieldrehzahl erreicht.

4. Steuerung ausgelegt zur Durchführung des Verfahrens nach den vorhergehenden Ansprüchen, wobei die Steuerung (42) eine Motorsteuerung und/oder eine Getriebesteuerung mit jeweiligen Datenaustausch ist.

## Claims

1. Method for recovering kinetic energy from a combustion engine (VM) by reducing the speed of the combustion engine (VM) for a predetermined time (t) during changing up of a transmission (14) in a vehicle and converting the kinetic energy of the rotation of the combustion engine (eng_spd) or of a drive unit into electrical energy by way of at least one electric machine (EM, 13), **characterized in that**, in a double-clutch transmission (14), the electric machine (EM) can be coupled to a first and second sub-transmission (TG₁, TG₂) and a first and second clutch (20, 30) on one of the sub-transmissions (TG1, TG2), and that energy is recovered from the braking combustion engine (VM) by adjusting an excessive torque (TG₂_max) with the second clutch (20) in the second sub-transmission (TG₂) and by adjusting a negative torque of the coupled electric machine (EM tq).

2. Method for recovering kinetic energy from a combustion engine (VM) according to Claim 1, **characterized in that** the start of the method (Start) is triggered by the request for changing up.

3. Method for recovering kinetic energy from a combustion engine (VM) according to either one of the preceding claims, **characterized in that** the method (Stop) is stopped when the combustion engine (VM) reaches its target speed.

4. Controller designed for carrying out the method according to the preceding claims, wherein the controller (42) is a motor controller and/or a transmission controller with respective data exchange.

## Revendications

1. Procédé pour récupérer de l'énergie cinétique d'un moteur à combustion interne (VM) en réduisant la vitesse de rotation du moteur à combustion interne (VM) pendant un temps prédéfini (t) lors du passage d'un rapport de vitesse supérieur (14) dans une transmission de véhicule et en convertissant en énergie électrique l'énergie cinétique de la rotation du moteur à combustion interne (eng_spd) ou d'une unité d'entraînement, au moyen d'au moins une machine électrique (EM, 13), **caractérisé en ce que** que la machine électrique (EM) est apte à être reliée à une première et une deuxième transmissions partielle (TG₁, TG₂) dans une boîte de vitesses à double embrayage (14) et à un premier et un deuxième embrayage (20, 30) sur l'une des transmissions partielles (TG₁, TG₂), **en ce que** la récupération de l'énergie du moteur à combustion interne (VM) en phase de freinage s'effectue par l'application d'un couple excessif (TG₂_max) avec le deuxième embrayage (20) dans la deuxième transmission partielle (TG₂) et en appliquant un couple négatif à la machine électrique (EM_tq) reliée.

2. Procédé de récupération d'énergie cinétique d'un moteur à combustion interne (VM) selon la revendication 1, **caractérisé en ce que** le démarrage du procédé (Start) est déclenché par la demande de passage au rapport de vitesse supérieur.

3. Procédé de récupération d'énergie cinétique d'un moteur à combustion interne (VM) selon l'une des revendications précédentes, **caractérisé en ce que** le procédé (Stopp) est arrêté lorsque le moteur à combustion interne (VM) atteint sa vitesse de rotation cible.

4. Système de commande conçu pour mettre en œuvre le procédé selon les revendications précédentes, le système de commande (42) étant un système de commande de moteur et/ou un système de commande de transmission avec échange respectif de données.
